# DEMANDE DE BREVET EUROPEEN

(11) **EP 2 941 986 A1**
(43) Date de publication de la demande: **11.11.2015**
(21) Numéro de dépôt: 14185136.0
(22) Date de dépôt: 17.09.2014
(51) Int. Cl.: A47J 36/00, A47J 36/06, A47J 36/16, A47J 37/10, A47J 43/28, A47J 45/06, A47J 27/08, A47J 27/21, A47J 27/212, F24C 7/00

(54) **Procédé d'assistance thermo culinaire**

(30) Priorité: 08.05.2014 EP 14075041
(71) Demandeur: Aver Design & Engineering Ltd, Robertsbridge, East Sussex TN32 5ER (GB)
(72) Inventeur: Carrera, Alonso, Mallorca (ES)

(57) **Abrégé**

Procédé d'assistance thermo-culinaire réalisé par le recouvrement des contenants. Recouvrement caractérisé par un volume de confinement thermique adapté au fonctionnement d'un système embarqué autonome, intégré dans un ensemble, constitué par l'extension(1) d'un couvercle conique central (2) muni d'une poignée bi cylindrique amovible (3) dotée d'écrans à affichage commutable (4) et d'une télécommande moniteur multi-supports. Un ensemble thermo-générateur (5) assurant l'alimentation électrique de sondes de température et d'une composante optoélectronique communiquant par radiofréquences, impulsions lumineuses et ultrasons. Un logiciel assurant l'interopérabilité avec des interrupteurs radiocommandés (6), des plaques de cuisson intelligentes (7) à commande commune, dotées de caméras imageur et de capteurs sous chaque foyer et d'un écran d'affichage/programmation à reconnaissance faciale (8). L'automatisation sécurisée des cuissons au gaz étant assurée par un coupe-circuit thermo fusible, un programmateur manuel à touches sonorisées et un thermocouple(9) disposé dans un boîtier(10) équipé d'un système à commande séquencée, reliée au couvercle par une connexion filaire USB (11). Les contenants disposant d'un système de paramétrage sans contact RFID/NFC (12) et par graphisme à code matriciel (13). Des accessoires interdépendants incluant un pyrométre à piquer sans fil, (14) un support tubulaire et une unité de brassage interchangeable, FIG(1)

Des moniteurs/programmateurs optionnels étant positionnables sur station d'accueil intégrée à la poignée et en port sur bracelet montre. Les moyens de la téléphonie mobile étant mis en oeuvre avec fonction de transpondeur et procédure protocolaire. L'invention autorisant l'automatisation, la gestion énergétique, l'alerte, la thermo régulation, la vidéo transmission.

Destinée à l'assistance thermo-culinaire domestique, l'invention étant facilement industrialisable.

## Description

La présente invention concerne un procédé d'assistance thermo culinaire multi cuissons communicant. Celui-ci étant réalisé par le recouvrement intelligent des contenants. Ledit recouvrement disposant d'un système embarqué interconnecté, électriquement auto suffisant. Les contenants pouvant être de formes et de capacités volumiques variables. L'invention optimisant la consommation énergétique et l'automatisation sécurisée. Ledit recouvrement comprenant un couvercle central en forme de dôme, doté d'une poignée intelligente bi cylindrique amovible. L'interconnexion s'établissant entre des unités de cuisson sans enceinte et ladite poignée. Les contenants pouvant disposer de données de paramétrage sans contact via des tags RFID et/ou par graphisme à code matriciel pour lecteur optique imageur.

Destiné à la cuisson alimentaire basse pression, l'optimisation énergétique et la sécurité sans surveillance. Le procédé offrant une utilisation configurable permettant de l'adapter à un mode personnel : choix du contenant, de la source thermique, programme, automatisation et suivi des cuissons sur écrans. L'industrialisation étant facilement réalisable. Il n'existe pas de procédé connu offrant toutes ses possibilités.

Des accessoires et des instruments complémentaires étant utilisés dans le cadre de l'invention, la demanderesse soulignant l'unité d'invention du présent brevet.

Le recouvrement des contenants de cuisson étant réalisé par la simple pose dudit couvercle ajusté ou non ajusté aux contenants. Lequel couvercle pouvant comporter un ou deux éléments. La configuration à deux éléments étant avantageusement privilégiée. La réunion des deux éléments devenant une unité solidarisée durant la cuisson. L'assemblage de ces deux éléments pouvant avoir soit une conformation plus grande que le contenant recouvert soit identique à celui-ci. Le terme d'intelligent pouvant s'appliquer au couvercle lors de son association avec ladite poignée. Une enceinte de confinement thermique permettant le contrôle des cuissons via la poignée étant une des caractéristiques essentielles du procédé. Ladite poignée étant un bi cylindre concentrique amovible, celle-ci étant adaptable sur des couvercles disposant d'une section d'ouverture compatible. Le cylindre central étant substituable par un accessoire cylindrique intégrant un dispositif de brassage. Chaque cylindre comportant son propre système d'affichage de températures.

La poignée intégrant une panoplie de moyens communicants, rendant l'échange interactif lors de l'utilisation avec l'unité de cuisson, ou un boîtier interrupteur d'alimentation électrique filaire ou non filaire (sectionneur/interrupteur) ou une électrovanne. L'échange permettant la régulation thermique, l'alerte et la vidéotransmission.

Les unités de cuisson et ladite poignée comportant un microprocesseur à logique firmware ouvrant des possibilités d'intelligence inter objets entre eux et l'environnement sur médias compatibles. Apparenté à un système d'intelligence embarqué, celui-ci étant également fonctionnel de façon entièrement autonome quelle que soit la configuration de la source thermique, énergie primaire ou unité de cuisson non équipée ou défaillante. L'interopérabilité avec des équipements terminaux et son mode de fonctionnement autonome en électricité et d'alerte-source et à distance sur objets multimédia rendant celui-ci compatible dans de nombreuses situations. L'affichage du contenant, l'alerte source et distante étant gérés par une instrumentation redondante. L'échange de données inter objets se situant sur trois niveaux.

En premier lieu on retiendra les communications directement liées à la sécurité et permettant la thermorégulation ou l'arrêt de la cuisson selon plusieurs critères programmables, incluant des choix personnels. (Température, couleur de thermo cuisson et durée).

Ensuite les précisions utiles au paramétrage entre les contenants et le système de cuisson et/ou le couvercle. Les paramètres d'affinage cuisson ne devant pas être confondus avec le paramétrage usine. Lesdites précisions venant compléter la réalisation du cycle de cuisson à la place d'un réglage utilisateur, en particulier par la rapidité et la sûreté des données numériques disposées sur les contenants à l'attention du programmateur.

On retiendra enfin l'affichage sur moniteurs fixes et mobiles, la télécommande, le contrôle vidéo des cuissons, la programmation et l'alerte. Lesdits écrans étant ceux directement concernés mais également d'autres médias compatibles. Dans ce cas, tout ou partie du contenu pouvant être affiché. Le minimum étant la représentation symbolique pour : » cuisson en cours : » et l'alerte de fin de cuisson ou d'intervention, ce type de message pouvant être relayé sur des médias non concernés directement (télécommande spécifique ou application sur smartphone) mais compatible via des diffusions d'alertes à effets sonores et visuels.

Les unités de chauffe électriquement alimentées directement et communiquant avec l'assistant devenant alors des ordinateurs thermo-culinaires, la gestion thermique étant thermo-régulée. Un écran de programmation de visualisation et serveur proxy faisant partie de la configuration. Les unités de chauffe n'acceptant que l'arrêt sans reprise de la cuisson étant de simples terminaux. L'unité de recouvrement et sa poignée intelligente étant un périphérique d'assistance thermo culinaire (P.A.T.)

Le P.A.T. pouvant être utilisé sur la plupart des sources thermiques sans enceinte, liées à la cuisson des aliments. Son mode de fonctionnement comportant une programmation axée sur la sécurité, l'automatisme, le suivi des cuissons à distance et la gestion thermique de celles-ci. Les unités de chauffe et le P.A.T. pouvant optimiser la cuisson par la capture de données spécifiques et générales disposées sur les contenants tels que : le volume, les dimensions, les compatibilités, la montée en température, fond thermo accumulateur, valeur d'émissivité, symboles d'entretien, possibilités de cuissons avec ou sans huile, légumes sans eau rajoutée par cuisson à l'étuvée directement. Température maximale d'utilisation, adresse internet du fabricant, le code objet (usine, date, intervenant), n° de série etc. Degrés de température atteignables avec l'utilisation du P.A.T.et de son couvercle et des possibilités en découlant. Ces données affichables étant avantageusement logées dans la poignée du contenant et /ou gravées pour lecteur imageur. Le tag cible communiquant par puce RFID/NFC aux fréquences LF 125 KHz ou en HF 13,56 MHz à destination du P.A.T. et de l'unité de cuisson.

La totalité du logiciel étant préinstallé dans le P.A.T., celui-ci étant ensuite transféré aux unités fonctionnelles reconnues. Lors de l'échange de données, plusieurs appareils pouvant être pareillement équipés. Le P.A.T. ayant une fonction de commutateur intégré dans le firmware. Le choix le plus pertinent étant accordé selon des critères prédéfinis, par exemple (puissance de l'équipement, énergie, taille de l'écran, éloignement de la source, mode de transmission, Li-Fi en particulier.

Une icône d'activation complétant la sélection et un graphisme unitaire facilitant la cohérence d'interprétation pour l'utilisateur.

La régulation thermique de l'unité de chauffe étant assurée soit indirectement par un boîtier radiocommandé branché dans la prise d'alimentation électrique soit directement sur l'unité de cuisson, ces deux éléments ayant une fonction de serveur proxy. Le boîtier radio commandé étant selon le cas apparent et comportant un module de chargement à induction pour la télécommande ou non apparent et fonctionnant sans interface directe.

La communication par radio fréquence étant complétée par un dispositif supplémentaire de type infrarouge irDA fonctionnant par réflexion du rayonnement entre ledit périphérique et l'unité de cuisson ainsi que par transmission d'ultrasons et par liaison optique Li-Fire ou visible light communication (VLC). Les deux entités disposant chacune des émetteurs et récepteurs (optique, radiofréquence, sonique). La liaison optique Li-Fi par diode éclairée à modulation d'amplitude étant avantageusement choisie dès lors que la transmission reconnue est validée.

La combinaison de toutes ses fonctions offrant une grande variété d'utilisations au lieu et place de plusieurs appareils et ustensiles ou encore par le volume d'un récipient adapté à la quantité désirée. L'ajout d'accessoires spécifiques interdépendants accroissant les possibilités.

Celles-ci permettant de cuire à la vapeur et autres cuissons à enceinte (four, friteuse, mijoteuse, machine à popcorn) ou en utilisation non liées à la cuisson directe d'aliments : par exemple, stériliser des contenants divers ou déshydrater des aliments, dans ce cas avec couronne et aérateur(s) à ouverture graduée par curseur. La pose de ventilateur(s) thermoélectrique(s) (non alimenté(s) haut de couvercle et bas de cuve améliorant la répartition thermique du contenant.

Le dispositif optoélectronique comportant une caméra destinée à l'affichage vidéo du contenant. Un paramétrage logiciel intégré permettant en outre des applications de type imageur aux fins d'interprétation de graphiques imprimés à code matriciel, figurant sur les emballages, rendant possible l'automatisation de la cuisson sans programmation.

Le paramétrage initial intégré à l'optique embarquée étant également configuré pour fonctionner au moyen d'accessoires spécifiques. En particulier grâce à une sonde à piquer dont l'échange de données est réalisé de façon optique entre l'instrument inséré à coeur et ladite caméra. La vérification du niveau des liquides via un support tubulaire microporeux ainsi que la sécurité alimentaire par la détection de pathogènes sur bases de données élargissant les possibilités de ladite caméra.

Un programme de sécurité incluant des procédures d'acceptation et refus dans le cas de cuissons sans surveillance. La durée d'un cycle de cuisson étant paramétrable en incluant l'inertie thermique des différents vecteurs et procédés énergétiques (induction, gaz, radiant, halogène, électrique) ainsi que du type de récipient disposant ou non d'un fond thermo accumulateur. Les autres modes de cuissons à thermique non électrique nécessitant une intervention humaine, néanmoins l'alerte et le suivi de cuissons étant eux toujours possibles.

L'arrêt de l'alimentation en énergie et la poursuite des cuissons en mode zéro énergie étant obtenus en double cycle par la prolongation en thermique inertiel. Le programme ne prenant fin qu'avec l'indication d'un pictogramme autorisant le soulèvement du couvercle, plusieurs minutes après l'interruption de la chauffe.

Les 3 phases associées à un code couleur étant (a) cuisson en cours (b) déplacement du contenant autorisé (fin du thermique direct) (c) soulèvement du couvercle (fin du thermique inertiel). L'automatisation totale du cycle complet tenant compte de la régulation thermique pour relancer la source de chaleur sans intervention humaine. Ce processus étant rendu possible au moyen d'un dispositif de veille active ou pour le gaz d'une électrovanne. Dans le cas contraire, le réarmement du cycle devenant manuel (interrupteur radiocommandé de prise électrique). Néanmoins, une cuisson complète pouvant être réalisée au cours d'un seul et même cycle par estimation du thermique inertiel. Le programme étant en outre conçu pour cesser ou continuer la cuisson par télécommande selon des paramètres consultables à distance et dans tous les cas couvercle posé sur le contenant. La thermorégulation étant également possible sans cycles d'arrêts reprises avec des unités de cuisson à très faibles puissances (environ 100 watts) permettant le maintien au chaud et la cuisson par stabilisation thermique.

L'émission du signal correspondant à une fréquence temporisée d'horloge pour la prolongation du cycle, l'absence de celui-ci, quelles qu'en soient les causes provoquant l'arrêt de l'alimentation électrique.

Le mode veille de l'unité de cuisson et du P.A.T étant indispensables. Celle-ci ayant deux variantes. La veille active permettant au programme l'arrêt et la relance automatique de l'unité de cuisson et la veille activable comportant en plus la mise en route à distance, seul le branchement secteur étant impératif. Ce dernier mode étant différent de la programmation temporisée. Une touche d'activation directe ou par télécommande permettant de lancer le cycle de cuisson quel que soit l'élément sollicité : P.A.T., unité de cuisson. Boîtier radiocommandé et boîtier d'électrovanne. Ces derniers pouvant former une entité mixte.

L'alimentation électronique du P.A.T. étant obtenue sans recours au réseau électrique en associant un film électro générateur et un accumulateur longue durée ultra mince à gestion de charge delta peak.

Ledit système comprenant le périphérique d'assistance à la cuisson communiquant par échanges radioélectriques et/ou optiques avec des terminaux disposant d'une alimentation électrique et de l'affichage sur des écrans de programmation et contrôle vidéo. L'interface étant configurée pour écrans multiples, même contenu. (Ecrans fixes et amovibles).

Les terminaux recevant les données permettant la gestion de la source thermique en fonction des paramètres émis par le P.A.T. Lesdits terminaux étant : les unités de chauffe, les interrupteurs communicants branchés sur l'alimentation électrique ou via un sectionneur, les boîtiers à vanne électromagnétique pour fluide gazeux. L'équipement comprenant des écrans fixes et/ou des zones de positionnement d'écrans amovibles offrant en outre des surfaces de pose à chargeur sans fil et interface commune de programmation, de vidéo contrôle et d'alerte.

Les moyens communicants mis en oeuvre étant ceux de la téléphonie et autres liaisons radiofréquences, impulsions lumineuses, Li-Fi et infrarouge, ultrasons et connexion filaire.

### On connaît :

Les ustensiles de cuisson comportant un thermomètre incorporé sur le couvercle. Parmi lesquels ceux de la société BEEM munis d'une sonde thermique d'étuve.

On connaît aussi le vitaliseur de MARION dont le poids du couvercle est adapté au soulèvement par l'effet de pression exercé par la vapeur.

D'autres marques utilisent ce principe de thermomètre à cadran. Tous ces ustensiles ayant un fond thermo diffuseur restituant la chaleur sans énergie électrique mais ne permettant pas d'atteindre ou d'indiquer des températures au-delà des 120° Celsius et de fait ne pouvant atteindre les températures de réaction de Maillard limitant leur utilisation. Par ailleurs tous ces ustensiles ne permettent pas de connaître avec précision une durée de cuisson lorsque le contenant et son couvercle ont des températures autres que la température ambiante et par conséquence l'automatisation ne pouvant être correctement gérée.

On connaît également un procédé permettant d'empêcher le débordement des liquides au moyen d'un cercle concave d'environ 30cm en silicone alimentaire, ouvert en son centre par un évidement circulaire de 13cm de diamètre sur lequel repose un élément constitué de six alvéoles se soulevant lors des débordements.

Ce procédé ne comporte pas d'objectif photographique pour visualiser l'intérieur d'un contenant alimentaire (cuve), n'offre pas un rendement thermique optimal et ne permet pas de connaître les températures ou d'utiliser une unité de brassage.

On connaît aussi des systèmes de vision pour fours mais pas multi contenants ou des contenants de taille fixe comportant leur propre source de chaleur associés avec des moyens communicants ou encore des terminaux de cuisson non mobiles ou de capacités volumiques non modulables. Lesdits procédés ne permettent pas une automatisation thermo-culinaire sécurisée adaptable aux contenants à thermique non confinée et à volume aléatoire, les systèmes proposés fonctionnant en mode stop uniquement.

Il existe en outre des procédés communicants en particulier celui de la société SEB appelé Nutricook Connect consistant à équiper une cocotte-minute de moyens de transmissions en association avec un smartphone. Ce procédé ne pouvant être comparé au présent brevet. Celui-ci, assurant le suivi des cuissons à distance, le contrôle vidéo des températures et l'affichage des cuissons sur moniteurs aux moyens de composants optoélectroniques communiquant automatiquement et à la demande, et ce, quel que soit le contenant utilisé dans un contexte thermo culinaire domestique. Les communications étant multi cibles humaines et matérielles. La fonction de commutateur permettant la hiérarchisation d'écrans.

### DESCRIPTIF :

Le procédé étant constitué par un ensemble d'éléments comprenant un système d'étuvage à haut rendement thermique, un dispositif d'alerte et de thermorégulation direct ou indirect.

La composante optoélectronique et une programmation numérique permettant la gestion thermique et l'affichage des cuissons sur au moins un écran. Ledit procédé incluant les unités de cuisson et les contenants. Ceux-ci intégrant un système de capture de données entre les différents objets permettant un paramétrage automatique. L'échange s'établissant entre deux objets dont l'un au moins possède un microprocesseur (unités de cuisson ou interrupteur radio commandé et poignée communicante).

### ZONE D'ETUVAGE :

Cette zone correspondant à un espace de confinement thermique généré lors de la pose du couvercle unitaire ou par la réunion de deux éléments solidarisés sur le contenant. Ledit espace étant spécifiquement adapté à la gestion thermique des cuissons par le système embarqué.

On retiendra avantageusement la configuration à deux éléments. Le premier élément étant un couvercle central en forme de dôme. Celui-ci devenant l'élément central de l'ensemble. Le deuxième élément étant l'extension du couvercle central. L'ensemble offrant une surface ajustée ou non ajustée avec le contenant recouvert. Dans les deux cas une poignée de préhension amovible étant intégrée dans l'élément central.

L'ensemble unitaire ayant une fonction anti-débordement et d'apport énergétique significatif, les deux faces étant utilisables par inversion. Le couvercle central étant adaptable à l'extension dans les deux cas. La forme convexe étant destinée à la cuisson d'aliments directement sur une surface chauffée avec ou sans rebord, tels les plats sans sauce, viandes, pizzas, tartes etc. Enfin un autre cas étant la cuisson de type plancha sans contenant, la cuisson s'effectuant à même la surface sans support intermédiaire.

Le recouvrement créant une enceinte de confinement permettant d'atteindre des températures de l'ordre de 180°C en fonction du contenant et de son contenu. (Matériau, volume et nature du contenu selon son taux d'hygrométrie). L'effet grill, brunissement des protéines par réaction de Maillard étant ainsi obtenu. La surface extérieure de la zone d'étuvage étant recouverte par une collerette isolante de protection thermique. Celle-ci amovible, comportant des inscriptions imprimées par graphisme d'interprétation signifiant.

### EXTENSION DE RECOUVREMENT:

Ladite extension pouvant être déclinée sous deux formes : Soit sous une forme supportant le couvercle au moyen d'une embase, dans ce cas, le couvercle central étant clipsé sur ladite embase. Soit par extension latérale compatible avec la poignée du couvercle et avec le contenant, dans ce deuxième cas le couvercle étant emboîté. Dans les deux cas, le recouvrement étant soit ajusté au contenant soit celui-ci est plus grand que le contenant recouvert. Dans le cas du mode ajusté, l'ajustement sur rebord interne étant préféré, celui-ci créant un joint d'eau.

La forme par couvercle central supporté dans une conformation plus grande que les contenants étant avantageusement privilégiée. Celle-ci, autorisant le recouvrement de contenants de dimensions variables. Les dimensions de l'embase étant : diamètre ou diagonale 40 cm, hauteur centrale 3 cm au moins, ouverture centrale 13 cm, ouverture recouverte par le couvercle central.

Solidarisée avec le couvercle central lors de l'utilisation l'extension de recouvrement étant incurvée et utilisable dans les deux sens de pose, le couvercle central étant adapté aux deux cas. Dans un double avantage la version toujours unitaire des deux éléments offrant une plus grande surface de recouvrement que le récipient étant privilégiée. Celle-ci disposant d'une ouverture centrale recouverte par le couvercle et sa poignée lors de leur assemblage. L'ensemble fonctionnant en vase clos lors de la cuisson.

De forme rectangulaire, carrée (sans arêtes vives) ou circulaire, ladite extension étant réalisée en matériaux bon conducteurs thermiques et facilement nettoyables, avantageusement améliorés par revêtement(s) de surface. Cette pièce pouvant recevoir des rajouts latéraux pour accroître la surface de recouvrement des récipients et pour faciliter la manipulation. L'assemblage de la forme d'extension avec le couvercle central muni de sa poignée étant avantageusement réalisé par le biais de deux tiges souples munies de picots de 1,5 cm venant s'encastrer dans une gorge ceinturant le couvercle central. L'ensemble devenant unitaire durant les cuissons. Les deux éléments séparables à volonté formant une enceinte asymétrique de confinement. L'extension pouvant également être unitaire par l'assemblage de plusieurs disques séparables de 22, 24, 26 et 28 cm. La forme finale étant la même. Un boîtier de transport, garni d'alvéoles pouvant être utilisé.

Dans un second mode de réalisation le couvercle ne dispose pas d'extension, celui-ci étant ajusté au contenant. La zone d'étuvage étant la même que dans la configuration à deux éléments. Ce modèle de couvercle possédant une poignée amovible d'un diamètre de 4 cm rendant possible la permutation des deux poignées.

### COUVERCLE CENTRAL:

Le couvercle central étant avantageusement réalisé dans un matériau à haut rendement thermique, facilement nettoyable, d'une épaisseur dite fine comprise entre 1,5 et 3 mm. On retiendra principalement, l'aluminium, l'argent, le cuivre, la tôle d'acier 18/10, la fonte, la céramique noire, le verre thermique, les polymères et les composites. La surface extérieure étant recouverte par une collerette amovible isolante imprimée. Deux pâtes de fixation situées sur l'extension permettant de la clipser sur le couvercle.

Les dimensions du couvercle central étant: diamètre intérieur 16 cm, diamètre extérieur 16,60 cm, rebord à gorge 0,3 cm, longueur de flèche sous dôme minimum 1,5 cm. Le maximum pouvant aller jusqu'à la forme ovoïde. Le sommet dudit couvercle étant muni d'une ouverture d'un diamètre de 4 cm destiné au positionnement de la poignée amovible. Le couvercle central recouvrant l'ouverture de l'extension dans la version dite supportée. Un adaptateur de recouvrement étant utilisé pour la pose sur contenants inférieurs à 13 cm. La pose directe du couvercle central sans l'extension étant une autre possibilité ainsi que le recouvrement des contenants par leur propre couvercle, celui-ci étant avantageusement adapté, par une même section d'ouverture et une configuration d'auto alimentation thermoélectrique permettant ainsi la permutation avec la poignée intelligente.

### OPTIMISATION ENERGETIQUE :

Le couvercle central constitué des matériaux cités comportant une collerette isolante contre collée sur un film souple générateur thermoélectrique. Cette collerette fixée étant elle-même recouverte par une deuxième collerette amovible. L'extension étant également formée des mêmes matériaux.

L'isolation étant complétée par une peinture de recouvrement extérieur sur toute sa surface avantageusement formulée par la sté SPI ayant pour nom SUPER THERM ou encore ENAMO GRIP et HPC. L'intérieur étant revêtu par une peinture vitrifiable chargée de nanotubes de carbone ou de céramique au nitrure de bore (graphite blanc) avantageusement choisie sous sa forme hexagonale, ou de graphène transformé (université du QUENN'S) ou de fluorographène par dépôt en phase gazeuse (couvercle et extension). Dans un double avantage le même traitement de surface est appliqué aux 2 autres faces du support d'extension, soit un même revêtement sur 3 faces. Un traitement de surface par un laser femtonique de la sté ALPHANOV étant une autre possibilité.

### POIGNEE INTERCHANGEABLE BI CYLINDRIQUE :

Intégrée au couvercle conique, ladite poignée ayant un diamètre de 7,5 cm hors tout formée par la réunion concentrique de deux cylindres. Le cylindre central d'un diamètre de 4 cm de surface intérieure pour une épaisseur de 0,4 cm. L'épaisseur étant utilisée pour loger une sonde de température. Le cylindre extérieur prenant appui sur le couvercle par un contact jointif. La surface du cylindre central étant de 12,56 cm², la surface périphérique de 9,42 cm². La surface totale étant 21,98 cm² correspondant à la zone d'affichage et à certains composants. Le cylindre central étant séparable du cylindre périphérique par coulissement.

Ladite poignée d'une hauteur de 5,5 cm étant désolidarisable du couvercle en totalité par dévissage puis partiellement par désemboîtement unitaire du cylindre central. La poignée dudit couvercle étant avantageusement amovible et interchangeable.

La poignée réunissant une composante optoélectronique et une instrumentation disposant de capteurs de températures. Un programmateur assurant la coordination entre les unités de chauffe ou des boîtiers électroniques au moyen de communications par radiofréquences et/ou optique (infrarouge, LiFi) et ultrasons et la connexion filaire. Des écrans de contrôle vidéo, de programmation et d'alerte permettant la surveillance des cuissons sur couvercle posé.

### REALISATION DE LA POIGNEE :

La poignée amovible étant formée par un bicylindre concentrique. Le cylindre central disposant de la composante optoélectronique, celui-ci étant interchangeable par substitution avec une unité de brassage cylindrique. Ladite composante étant isolée de l'enceinte de confinement par un matériau transparent, facilement nettoyable et possédant une bonne tenue thermique et chimique. Un matériau de qualité optique étant vissé sur le tube dans sa partie haute et dans la zone de contact avec l'étuve par une capsule. Les Téflons FEP, MFA, PFA étant des premiers choix ou encore le verre borosilicate. Les composants électroniques de la poignée étant hydrophobes selon le procédé de la société HzO. La surface voûtée de la poignée en zone d'étuvage étant avantageusement recouverte d'un revêtement omniphobe.

Chaque cylindre étant fonctionnel, indépendamment de l'autre. Réalisé dans un matériau naturel, artificiel ou synthétique notamment en polystyrène syndiotactique ou en polyamide 6.6.6 facilement usinable. L'assemblage de la poignée sur son couvercle étant avantageusement réalisé par emboîtement-mâle/femelle- avec vissage quart de tour et arrêtoir. Le cylindre excentré reposant entièrement sur le couvercle. Une ouverture centrale de 4 cm pratiquée sur le couvercle permettant le passage de la poignée du seul cylindre central. Le cylindre excentré prenant appui sur le rebord extérieur de ladite ouverture.

### COMPOSANTE DU CYLINDRE PERIPHERIQUE :

Ledit cylindre étant un tube d'un diamètre de 7,5 cm hors tout pour une largeur utile de 1,25cm, celui-ci possédant des préformes utilisables comme chargeur à éléments dans sa partie supérieure avec une connectique USB et des témoins sonore et visuel d'alerte. Lesdites préformes traversant de part en part la poignée et faisant jonction avec le couvercle. Celles-ci étant utilisées pour l'alimentation électrique par thermo-générateur à effet Seebeck et pour mesurer la température de l'étuve. Au moins deux sondes à thermocouple positionnées dans ce cylindre venant en buttée jusqu'au couvercle. Les sondes alimentant l'afficheur électronique de température sur ce cylindre, et ce, indépendamment d'autres écrans annexes. Le thermomètre électronique se présentant sous la forme d'un dispositif de prise de température électrique avantageusement sous forme d'un thermocouple de type T. Dans tous les cas les températures mesurées étant transmises sur l'afficheur de l'unité de cuisson et sur autre(s) écran(s) distants et sur moniteur programmateur amovible. La poignée étant avantageusement munie de perforations et de préformes électriquement autoalimentées destinées au rangement d'éléments fonctionnels et non fonctionnels facilement accessibles répartis autour de la circonférence. Deux tuteurs thermo-fusibles coupe-circuit et un sélecteur manuel de programmation étant disposés dans ce cylindre.

Ledit cylindre étant muni d'une connectique permettant la pose d'un écran de programmation amovible optionnel assurant l'affichage à même le couvercle ainsi que le suivi à distance des cuissons. La pose pouvant être permanente, celle-ci occultant l'affichage du cylindre central seul. Ce type d'affichage étant doublé sur l'unité de cuisson ou sur le boîtier interrupteur d'alimentation électrique à radiofréquence. L'interface de fonctionnement étant la même.

Le graphisme identique facilitant la programmation, le suivi des cuissons et l'alerte. L'interface d'affichage/alerte moins complète étant symbolisée par une icône sur les médias audio et/ou visuels compatibles. Chaque cylindre étant fonctionnellement indépendant.

La composition non exhaustive comprenant : Une sonde de température à thermocouple, un écran de forme incurvée, monochrome, multi sources de : un (1 cm) sur deux et demi (2) divisé en quatre (4) secteurs correspondant à des zones et matières de mesures affichables. Le cylindre périphérique disposant d'un système de communication de type NFC (communication en champ proche) ou convergence NFC/RFID par chip combo. Un module de transmissions à la fréquence 433MHz FM à la norme domotique et un transducteur piézoélectrique à ultrasons. Un transducteur optoélectronique par liaison infrarouge (irDA). Un récepteur LiFi par modulation d'amplitudes lumineuses. Un transducteur/transpondeur par radiofréquence de type WiFi ou Bluetooth 4.0. Ceux-ci étant avantageusement mis en oeuvre dans ledit cylindre ainsi qu'une diode de couleurs RVB, un microphone étalonné, un haut-parleur, deux tuteurs coupe circuit thermo fusibles accessibles par soulèvement du couvercle de protection. Un sélecteur amovible de programmation manuel de type minuteur (durée et température). Une connectique de type station d'accueil horizontale, avec cabochon, destinée au positionnement d'un moniteur mixte de programmation et d'affichage, une prise USB latérale.

La partie calcul se situant dans ce cylindre, celui-ci comprenant un microcontrôleur à processeur DSP ou plus avantageusement un microprocesseur de type SoC, alimenté en données par bus CAN (Controller Area Network) et une mémoire. Les éléments de surface étant regroupés dans une zone comprise entre 0 et 50°C correspondant au prolongement des indications de température du cadran central y compris la connectique de station d'accueil. Le reste du pourtour soit 130°C étant mis à profit pour réaliser la jonction avec un circuit électrique inférieur. Le principe dit en dents de scie étant repris avec 5°C d'amplitude entre le haut et le bas sur 130°C. Chaque degré correspondant à un trou permettant à un contacteur rotatif intégré dans un programmateur/minuteur amovible la gestion culinaire sécurisée.

L'alimentation électrique étant réalisée par un double dispositif thermo générateur dont l'un situé sur le couvercle par recouvrement de celui-ci au moyen d'un disque souple et l'autre tubulaire sur la poignée dite à effet Seebeck par conversion thermo électrique d'un thermocouple.

Ce dispositif comportant au moins deux unités faisant contact avec la surface du couvercle central, une des deux unités étant utilisée de façon mixte comme sonde de température.

Ce cylindre disposant en outre d'une horloge avec durée du cycle, d'une source sonore et lumineuse par diode clignotante, d'un témoin de charge, d'un gyroscope, d'un accéléromètre.

### COMPOSANTE DU CYLINDRE CENTRAL:

Le cylindre central intégrant des éléments optiques tels que : Caméra et pyromètre notamment ainsi qu'un cadran à flèche sous tension, un écran et une sonde bimétal.

La sonde bimétal étant reliée au cadran à disque gradué par une tige placée dans l'épaisseur du cylindre. Les éléments optiques étant situés sous le disque gradué. Ledit cylindre pouvant être extrait de son logement pour recevoir une unité de brassage en lieu et place de celle-ci.

Ladite composante étant caractérisée par l'intégration d'au moins un système optique à microcontrôleur et processeur DSP (processeur digital du signal) ou plus avantageusement intégré dans un microprocesseur à système SoC. L'électronique d'interprétation logée dans le cylindre excentré de la poignée fonctionnant par alimentation en données par bus CAN.

Le dispositif comportant deux LED dont une I/R et une blanche destinées à un pyromètre et son photorécepteur et une caméra. La composante optique dirigée vers l'intérieur étant située sous le cadran du tube central. L'optique de la caméra étant avantageusement choisie dans la technologie C.MOS avec capteur en graphène (invention de l'université NTU de Singapour). Le récepteur comportant un détecteur de luminosité ambiante compris entre 0,01 et 0,05 Lux afin de déterminer l'apport lumineux pénétrant l'enceinte de confinement dans sa partie inférieure.

Ladite caméra comportant un paramétrage usine incluant (1) la quantité des liquides, (2) la reconnaissance d'impulsions lumineuses émises par une LED RVB, (3) la fonction d'imageur permettant l'interprétation d'un graphisme à code matriciel (imprimé et gravé) et par la sélection d'une couleur thermo culinaire désignée et/ou par une manifestation physique mémorisée et enfin par la détection de pathogènes sur base de données.

### SONDES DE TEMPERATURES EN ZONE D'ETUVAGE : une par cylindre.

La première sonde située dans le cylindre périphérique étant à contact direct entre ladite sonde et le couvercle. Celle-ci faisant jonction avec l'extérieur dudit couvercle, celui-ci n'étant pas perforé. Ladite sonde étant à thermocouple avec affichage électronique. Les mesures de température du cylindre périphérique autorisant des relevés permanents correspondant à la zone d'étuvage. La température pouvant atteindre 180/185°C. Mesure réalisée par les capteurs (1) à thermocouple avec le couvercle solide contre solide et (2) bimétal vapeur d'étuve.

La mesure correspondant à la température atmosphérique d'étuvage transmise au matériau du couvercle. La température étant précisément étalonnée et extrapolée numériquement. Ladite mesure étant affichée indirectement sur un écran LCD situé sur le cylindre périphérique. La synergie des différentes sondes de températures rendant possibles les variations thermiques chaud/froid du couvercle et des contenus.

La deuxième sonde sans contact direct avec un solide étant une sonde de mesure en atmosphère étuvée, cette sonde dépendant du cylindre central. La mesure étant réalisée dans l'enceinte même de l'étuve au moyen d'un orifice pratiqué sur le couvercle. L'arbre de transmission de l'instrument étant logé dans l'épaisseur du matériau dudit cylindre. Les deux ouvertures étant parfaitement alignées. Lors des variations thermiques, une sonde à dilatation/contraction activant une tige munie à son extrémité d'une aiguille rotative sur un cadran. La version à sonde atmosphérique sans contact étant plus précise. Néanmoins, en version numérique, les paramètres étant étalonnés et donc présentés avec une plus grande exactitude dans tous les cas, notamment pour la sonde de contact située sur le cylindre excentré. La température relevée ne correspondant pas à la température exacte de l'étuve mais ajustée très précisément par étalonnage.

Afin d'ajuster précisément la mesure et de la rendre cohérente entre le couvercle et le contenu, les températures pouvant être différentes, l'utilisation d'un pyromètre étant judicieusement mis à profit pour indiquer la température du contenu. Une flèche indiquant les deux mesures, celle du couvercle et celle du contenu et le sens de la jonction. Les manifestations physiques telles que couleurs et ébullition étant également prises en compte.

### SONDE BIMETAL DU CYLINDRE CENTRAL :

La sonde du cylindre central fonctionnant selon le principe d'un thermomètre bimétal par variations thermiques à transmission mécanique, le mouvement transmis par ladite sonde bimétal comportant une aiguille indicatrice sur un cadran gradué (principe connu et très largement utilisé). La température pouvant atteindre 180° C en mesure atmosphérique de l'étuve et graduée en conséquence sur ledit cadran. Dans le cas présent ladite aiguille étant indirectement activée par rotation sur un axe charnière excentré. La liaison s'effectuant au moyen d'une fine tige, supportant la poussée, fixée sur l'arbre de transmission de ladite sonde. Le mouvement de la flèche étant activable sur un plan de 360° géométrique dans les deux sens. La sonde étant de type atmosphérique sans contact avec le couvercle. Le principe du mouvement de la flèche étant mis à profit pour la réalisation d'un écran/cadran mixte.

### ECRAN/CADRAN : principe de fonctionnement.

Ce principe reposant sur le mouvement circulaire de la flèche du cadran, utilisé pour obtenir une température à affichage électronique sur un écran électronique monochrome, avantageusement muni d'au moins une LED RVB hexadécimale. Cet écran étant intégré dans le cadran central soit au centre de celui-ci, soit dans une fenêtre. Lors de la rotation du mouvement bi-axial de la flèche, générée par les variations thermiques, une matrice en V étant activée par des contacteurs en dents de scie divisés en degrés Celsius, répartis dans l'axe de rotation linéaire et en sous degrés de :1/10, 1/5, ou 1/2 °C sur 2 ou 3 niveaux positionnés en longueur de ladite flèche et en largeur (2D). La matrice étant placée sous ou sur l'axe de rotation de la flèche, le cadran étant sectorisé sur 180°C correspondant à 360° du plan. L'activation des contacteurs pouvant être indirect, non touchant, de type magnétique ou électromagnétique. La rotation de la flèche pouvant s'exercer directement ou indirectement par poussée ou encore par auto rotation de ladite flèche.

L'activation étant déclenchée lors de la rotation de la flèche, ce dispositif ayant fonction de transducteur ne nécessitant pas de touche de mise en route.

### AUTOALIMENTATION ELECTRIQUE :

Les deux cylindres contenant des éléments électroniques fonctionnant en autosuffisante au moyen d'un circuit électrique autoalimenté par un dispositif thermoélectrique, de la société PERPETUA, celui-ci se présentant sous l'aspect d'un film flexible épousant tout ou partie de la forme extérieure du dôme central (conique) puis, recouvert par une collerette et/ou une peinture isolante. Le dispositif étant complété par des batteries minces solides rechargeables de la société IPS. L'alimentation électrique étant distribuée dans les deux cylindres, certains produits étant eux même autoalimentés individuellement.

Le doublement du premier dispositif étant avantageusement assuré par un générateur thermoélectrique à effet Seebeck, dont au moins 2 éléments fonctionnant en série sont intégrés dans le cylindre périphérique. Un des deux éléments étant utilisé comme sonde électrique de température. Le rendement optimal étant comprises entre 100 et 600K pour un facteur de mérite de ZT ^{∼}1 au moins.

Le couvercle intelligent pouvant fonctionner sur de multiples sources de chaleur on retiendra également le principe du convertisseur d'énergie vibratoire (générée ou naturelle) en électricité et les transmissions d'énergie sans fil par couplage capacitif, induction électromagnétique, résonance magnétique et ondes radio. En particulier selon brevet d'invention des entités WiTricity et Murata. Le dispositif récepteur étant avantageusement intégré dans le cylindre périphérique, l'émetteur sur l'unité support.

Une prise USB permettant l'alimentation électrique de petits appareils lors de la chauffe d'un récipient et d'une électrovanne sécurisée par thermocouple pour le gaz ou encore connexion filaire pour la gestion thermiques des unités de cuisson ou via un boîtier radio communicant.

### IMPLICATIONS D'USAGE SELON LES CONFIGURATIONS :

Le 1^{er} niveau nécessitant la surveillance et l'intervention physique (arrêt-marche) sur l'unité de chauffe ou la source thermique. Le 2^{éme} niveau correspondant à la programmation et/ou suivi de cuissons .3^{éme} niveau assurant le thermo contrôle actif soit de façon partielle par coupure de l'alimentation électrique de l'unité de chauffe via un boîtier multifonctions interrupteur ou automatisation totale à double cycle. Dans ce dernier cas la plaque de cuisson étant fonctionnelle avec le périphérique d'assistance (P.A.T.) et pour le gaz via une électrovanne compatible.

La thermorégulation étant ainsi active jusqu'à son terme en double cycle avec la prise en compte de l'inertie thermique.

### MESURES DE TEMPERATURE SANS CONTACT TYPE PYROMETRE :

Celui-ci faisant partie du bloc optique, l'instrumentation sans contact de type pyromètre étant à affichage indirect l'écran étant situé dans le cylindre périphérique.

Dans tous les cas l'affichage étant présenté sur les écrans connectés, en particulier unité de cuisson et télécommande moniteur.

Ce dispositif élargissant les prises de températures à distance soit en préchauffage à la demande, soit pour vérifier la température de surface d'un aliment ou d'un liquide.

La température pouvant atteindre 330°C.en surface de contact du matériau avec la source thermique, équivalant à un thermostat 10. (Dix) La zone haute correspondant à l'étuve pouvant atteindre 180°C. Les mesures étant prises par un thermomètre bimétal à cadran central et par un instrument électrique par thermocouple à écran excentré. Le cylindre central étant permutable par une unité de brassage les températures étant alors affichées sur le cylindre périphérique. Les températures étant ainsi présentées sur au moins un écran.

### ECRAN DU CYLINDRE PERIPHERIQUE :

L'affichage étant réalisé au moyen d'un deuxième écran excentré monochrome multi sources, situé sur la poignée, celui-ci de forme incurvée suivant la courbure du cylindre périphérique. Un sélecteur de températures à cadran bimétal étant également présent.

Ledit écran d'une largeur d'un (1) cm pour une longueur de deux (2) cm, divisé en quatre (4) zones comportant 2 LED RVB, de 2mm², dont une pour l'indication des cuissons en cours et les différentes phases de celles-ci, symbolisées par trois couleurs : rouge (thermique normal) orange (fin du thermique principal) et vert (fin du thermique inertiel). La deuxième LED étant destinée à visualiser la couleur de surface et à coeur des cuissons en cours, couvercle posé. Trois (3) zones de températures et matières (liquide et solide) pouvant ainsi être indiquées sur l'écran (étuve, surface de l'aliment et à coeur) et deux (2) thermo-couleur de cuisson.

### AFFICHAGE DE PROGRAMMATION :

Configuré pour fonctionner avec ou sans écran de programmation, le cylindre périphérique disposant d'une connectique permettant de disposer d'un afficheur/programmateur en pose station d'accueil. Avec dans ce cas la totalité des éléments de programmation et surveillance interne du contenant ainsi que la recharge électrique dudit programmateur.

Celui-ci pouvant rester à demeure sur la poignée avec plusieurs degrés d'inclinaison ou être porté en mode bracelet. L'application de programmation sur smartphone étant toujours possible ainsi que l'activation sur une seule unité telle que : les plaques de cuisson, la télécommande, le boîtier interrupteur à écran. L'afficheur pouvant rester à demeure sur ce support soit être utilisé comme télécommande portée en bracelet avec des fonctionnalités supplémentaires dont l'une au moins étant d'être une montre à interface automatiquement configurée selon le support. Ledit afficheur reprenant les fonctionnalités et le graphisme du cadran inférieur par basculement du contenu avec des possibilités étendues de vidéo contrôle et de programmation.

Le socle poignet de type bracelet montre et la connectique type station d'accueil poignée offrant une totale compatibilité de port dans une approche pratique et sécuritaire.

### PORT MIXTE POIGNEE/ BRACELET.

La surveillance sur l'unité de chauffe et à distance du cycle de cuisson étant un élément de sécurité. A cette fin, le port sur socle bracelet et/ou sous forme de station d'accueil poignée offrant cette double possibilité soit en mode programmateur porté ou à demeure sur le P.A.T. Le passage de l'un à l'autre étant rendu possible par un socle bracelet configurable par écartement coulissant latéral. La reconnaissance automatique du support générant la configuration de l'interface. L'afficheur étant multifonctions de type programmateur montre/téléphone ou programmateur /montre. Ce type d'affichage intégrant en plus l'affichage interne du contenant. Ledit programmateur étant optionnel, son utilisation n'étant pas indispensable. La recharge dudit afficheur ainsi qu'une batterie annexe étant réalisée lors de la connexion sur la poignée du P.A.T. celle-ci devenant station d'accueil lors de la pose.

### COULEURS ET MENTIONS AFFICHEES

Les couleurs internes dites à coeur correspondant à des nuances de teintes thermo-culinaires soit en imagerie imprimée réelle soit par des diodes RVB les plus représentatives en mode hexadécimal. Parmi lesquelles # FFFFFF, # FFCCCC, # FF0000,# CC0000, #990000. Celles-ci étant complétées par des mentions telles que : décongelé, cru, bleu, saignant, à point, bien cuit et une indication liée à la fraîcheur et à l'état sanitaire intégré dans une base d'images. Les couleurs de surface pouvant être légendées selon le type d'écran par des recommandations médicales et autres conseils nutritionnels et culinaires.

### ACCESSOIRES :

### (a)Adaptateur interne à réservoir de liquide.

Le niveau des liquides étant assuré par un support tubulaire microporeux complémentaire du dispositif optique, aligné et posé dans son axe. Celui-ci étant réglable en longueur par assemblage de segments vissés ou télescopiques. Ledit support pouvant être étagé pour y placer horizontalement des formes hémisphériques pour : griller, cuire à la vapeur, ou en immersion directe ou indirecte de contenants. Une anse de préhension servant pour le soulèvement et l'insertion dans la cuve. Le ou les étages à fixer sur l'élément central creux pouvant avoir une dimension inférieure à celle du récipient, leur maintien étant assuré par une tige faisant buttée avec la paroi. Les étages étant formés de supports hémisphériques adaptables par emboîtement. Des préformes permettant d'y placer des aliments ou encore des éléments précisément ajustables. Des conditionnements avec ou sans contenu alimentaire, comportant avantageusement un orifice central traversant ou non pour poser et enlever ceux-ci de la cuve de cuisson. Des annotations signifiantes par graphisme à code matriciel pour la caméra paramétrée en mode imageur permettant une programmation entièrement automatisée. Celles-ci pouvant être détachables des conditionnements. Afin d'améliorer la vision du liquide l'élément support étant doté à sa base d'un revêtement nettoyable reconnaissable par l'optique préalablement paramétrée. Les autres segments étant étanches, un pas de vis ou 2 accroches baïonnette étant disposés sur ce premier segment.

### (b)Unité de brassage.

Le cylindre central de la poignée étant permutable par un accessoire complémentaire destiné aux préparations culinaires. La substitution du tube central pouvant être utilisé comme réservoir de fluides (liquides ou poudres) ou d'accès visuel, regard de contrôle et unité de brassage. A cet effet, un dispositif de brassage ajustable en longueur par vissage de segments sur l'axe rotatif et sur le bras mélangeur le rendant ainsi compatible avec le récipient. Les fonctions du cylindre excentré étant préservées, notamment l'affichage des températures réalisées par le thermomètre intégré dans ledit cylindre. La rotation étant réalisée par le biais d'un petit moteur, après dépose du cylindre central. Une variante consistant à utiliser un couvercle comportant deux ouvertures permettant de coupler fonctionnellement chaque unité.

Une sonde amovible et coulissante à thermocouple étant logée dans la tige de brassage avec dans ce cas la température affichée sur au moins l'écran électronique du cylindre excentré, avec ou sans rotation de ladite tige. Cet accessoire permettant en outre des brassages avec ou sans cuisson et des mesures de températures du récipient et des ingrédients. Lors du contact avec le fond du contenant la rotation n'étant pas acceptée. Cette configuration autorisant un double affichage sur écran dont celle transmise par le thermomètre à sonde par thermocouple de type vapeur étuvée situé dans le cylindre excentré. Une deuxième mesure étant obtenue par le contact du thermomètre amovible intégrée à la tige de brassage et transmettant les températures de la sonde par exemple avec un liquide en cours de cuisson. L'unité de brassage étant équipée d'une caméra sans lentille à transformée de Fourier située dans le boîtier. La tige de rotation étant pourvue d'une lamelle auto nettoyante pour l'optique et d'une sonde à thermocouple amovible et coulissante mixte, solide et liquide. Cet élément étant également muni d'un pyromètre, soit au lieu et place de la sonde coulissante soit en complément de celle-ci. Cette mesure élargissant la prise de température par immersion celle-ci pouvant atteindre 250° C. (huile par exemple) et par contact avec le matériau du contenant pour afficher les températures de préchauffage pouvant atteindre 330°C. Équivalant à un thermostat 10.

### (c) PYROMETRE COMMUNICANT AUXILIAIRE :

Un deuxième pyromètre auxiliaire interdépendant de la caméra du cylindre central étant utilisé comme sonde à piquer. Celui-ci étant un pyromètre à piquer sans fil et sans pile. L'instrument étant à usage mixte, température ambiante et thermique en mode inséré. L'outil ne nécessitant aucune alimentation électrique. Ledit instrument étant pourvu d'un écran LCD à 27 segments au moins plus 1 LED RVB. Celle-ci assurant la transmission optique et la couleur interne dite à coeur. La caméra de la poignée étant configurée pour afficher extérieurement les données émises par le pyromètre auxiliaire. La zone de lecture de l'instrument étant comprise entre 1 et 1,5 cm², autorisant ainsi l'affichage électronique de la température et les nuances de couleurs de cuisson à coeur directement sur l'écran de l'instrument. La LED RVB ayant la double propriété d'échanger avec l'optique de la caméra poignée et de présenter directement la couleur dite à coeur sur le mini écran d'environ 1,5 cm2 disposé diamétralement à l'extrémité de l'instrument tubulaire, à l'opposé de la pointe ainsi que deux LED éclairage et infrarouge.

La caméra du pyromètre à insérer étant avantageusement muni d'une caméra sans lentille à transformée de Fourier (université de Cornell USA). Le tube constituant le thermomètre disposant d'une LED blanche orientée vers l'intérieur de l'aliment afin d'éclairer en profondeur la zone à visualiser.

Les transmissions dans la zone d'étuvage étant réalisées par radiofréquence entre l'instrument inséré et la poignée ou plus avantageusement par liaison optique entre la LED d'affichage RVB dudit instrument et la caméra centrale intégrée dans la poignée. Le même principe étant transposable pour des cuissons via un écran en façade. Four à caméra intégrée et paramétrée. Cette configuration autorisant 3 affichages simultanés de températures et 2 couleurs de thermo-cuisson en association avec la composante optoélectronique de la poignée.

Température interne dite à coeur (1) et sa couleur réelle associée (a).

Température (2) et couleur de surface (b)

Température de l'étuve (3)

L'autosuffisance électrique de l'instrument destinée à la composante optoélectronique étant obtenue de façon thermo électrique selon le principe de l'effet Seebeck, avec dans ce cas l'emboîtement du dispositif sous le cadran et à l'opposé de la sonde. L'alimentation électrique étant complétée par des cellules MEC (micro énergie cell) de la société IPS. L'intégration de la composante optoélectronique se situant à environ 5 cm de l'embout de l'instrument. Le corps tubulaire ayant un diamètre de 1,5 cm pour une longueur de 7 cm.

### COMPOSITION DU PYROMETRE AUXILIAIRE :

La liste non exhaustive comprenant les unités suivantes :(a)-Microprocesseur couplé à un dispositif MEC Thinergie de IPS - (b)-Photo récepteur interne dédié pyromètre-(c)-Emetteur/indicateur optique par diode RVB- (d)-Emetteur/récepteur transpondeur radiofréquence-(e)-Module générateur thermoélectrique pour un facteur de mérite ZT ^{∼}1. à aimant permanent. (F)- Générateur électrique à magnétostriction inverse au Galfénol (U.Uéno) assurant l'alimentation électrique en mode température ambiante. (g)-LED d'éclairage interne blanche (h)-Caméra sans lentille à calcul par transformée de Fourier (Université de Cornell USA et(i)-LED d'illumination infrarouge du pyromètre. (J)-Ecran LCD disposant d'au moins 27 segments(K)-Photorécepteur en surface. -Bague coulissante de nettoyage.

### COMMUNICATIONS SECURITAIRES :

Le procédé de thermo-étuvage par recouvrement multi-contenants étant à contrôle actif et passif. La source thermique pouvant être gérée électriquement étant à contrôle actif.

L'autre catégorie ne pouvant assurer l'interruption ou la thermo régulation, celle-ci impliquant une intervention humaine. Dans les deux cas l'alerte source et à distance étant automatiquement déclenchée. Les cuissons en mode automatique en cycle complet n'étant pas acceptées lorsque le système de chauffe n'est pas électriquement gérable.

La convergence chip combo RFID/NFC autorisant des échanges sécuritaires inter objets. Lesdits échanges en mode sans contact s'établissant entre les contenants disposant d'inlays RFID. Les unités de cuisson et le P.A.T. fonctionnant en mode émulation de carte, mode lecteur, et mode pair-à-pair les échanges impliquant l'utilisation d'intergiciels. L'interconnexion objets s'établissant directement à partir du P.A.T. soit en relais avec les unités de cuisson ou boîtiers radiocommandés.

Enfin, et ne dépendant pas des poignées, des gravures intégrant lesdites informations représentées par un graphisme à code matriciel étant gravées sur le fond interne et/ou externe des contenants. Ces informations interprétables par des caméras de type imageur étant disposées sous chaque foyer des unités de cuisson ou par la caméra poignée. Celles-ci étant avantageusement gravées sous la forme d'une pastille centrée en langage Bokode sans LED ou sur une surface plus grande de deux cm² maximum. Les unités de cuisson disposant en outre d'un thermomètre permettant d'afficher températures et graphisme interprété sur l'écran de programmation. Les deux étant complémentaires. Ce dispositif étant compatible avec la traçabilité des emballages alimentaires imprimés par un graphisme à code matriciel.

La lecture étant effectuée soit par l'appareil de chauffe soit par le P.A.T. Les photographies étant déclenchées automatiquement couvercle posé et manuellement hors recouvrement.

### TERMINAUX COMPATIBLES : plaques de cuisson

Les terminaux formant deux catégories avec ou sans relance automatique de la source thermique. Tout d'abord ceux physiquement alimentés par un courant électrique de puissance permettant de faire fonctionner les unités de cuisson, qu'il s'agisse de l'alimentation réseau ou d'une puissance équivalente.

### - 1^{er} cas : L'unité de cuisson est compatible avec le P.A.T.

Le qualificatif d'ordinateur thermo culinaire pouvant s'appliquer aux unités de cuisson dites elles-aussi intelligentes. Le terminal en association avec le P.A.T. autorisant ainsi un cycle complet de thermorégulation.

L'unité de cuisson disposant d'une interface système (homme/machine), celle-ci intégrant la fonction de transpondeur/serveur proxy. Les échanges avec le périphérique d'assistance étant relayés vers les objets connectés. Le terminal disposant d'un programmateur/moniteur affichant le suivi de cuissons. Les communications s'établissant par radiofréquence et/ou infrarouge et/ou LiFi et par ultrasons. Les échanges étant fonction de l'environnement, de la gestion thermique, de l'alerte et de la programmation. Une zone froide matérialisée (bandeau frontal ou en surface) permettant le chargement par induction de la télécommande. L'unité de cuisson pouvant n'avoir que la seule fonction d'interrupteur thermique. Les unités disposant de moyens communicants machine/humain de type téléphonie mobile/WiFi et un machine to machine. Les transmissions fonctionnant par : ultrasons, impulsions lumineuses, radiofréquences et connexion filaire, élargies aux échanges de proximité par puce NFC. Lesdites unités étant avantageusement munies d'un écran intégré mixte moniteur/programmateur à reconnaissance faciale avec la totalité du système comprenant : un rechargement par induction posée, un serveur proxy, une sonnerie d'alerte modulable, un transducteur ultrasonique piézoélectrique, une batterie auxiliaire, un périphérique NFC, un microphone intégrant des sonorités préenregistrées, un haut-parleur, une prise électrique auxiliaire destinée à l'unité de brassage, accessoire du (P.A.T.).

Une seule et même programmation étant nécessaire pour l'unité de cuisson et le P.A.T. Un écran tactile de type moniteur incluant la programmation et l'affichage du contenu culinaire et des températures durant le cycle de fonctionnement symbolisé par une icône sur les deux unités. L'écran disposant en outre d'une caméra et d'une diode infra-rouge de reconnaissance faciale, l'interface reprenant le même graphisme que celui de la poignée. Lesdites plaques de cuisson intelligentes intégrant un dispositif de communication inter objets non seulement avec la poignée à système embarqué intégré mais également avec les contenants culinaires. Le dispositif étant interrogateur par radio fréquence NFC, la poignée des contenants étant équipée de tag RFID émetteur/récepteur de classe1 ou 2.

Un deuxième dispositif optique situé sous chaque foyer, symbolisé par un pictogramme, étant une caméra imageur au moins utilisée pour photographier une zone comportant des indications gravées par un graphisme à code matriciel sur les contenants. Celle-ci pouvant être mobile. Ladite caméra permettant d'affiner des précisions de paramétrage automatique ou de conseils affichés. Le dispositif optique étant avantageusement complété par un capteur de températures à calculateur prenant en compte la surface de chauffe et celle du récipient. La mesure étant effectuée soit un pyromètre, soit par un capteur thermique non refroidi, de FLIR Systems, soit par un thermomètre à thermocouple. Le facteur d'émissivité étant transmis par lecture optique de la gravure ou le tag RFID/NFC. Une vitrocéramique translucide ou un verre thermique sur toute la surface de chauffe ou sous forme de pastille centrale hors du contact brûleurs pour le gaz permettant à l'optique de visualiser la zone concernée.

L'ensemble du dispositif pouvant être mobile notamment pour les unités de cuisson supportant plusieurs zones de pose. Le départ étant situé au centre.

### BOÎTIER INTERRUPTEUR COMMUNICANT :

### 2^{ème} cas : La plaque de cuisson n'est pas compatible avec le P.A.T.

Un interrupteur électrique radio communicant étant alors utilisé. Cet élément pouvant être décliné sous deux variantes, mais avec toujours la même finalité ; l'interruption de l'alimentation électrique de l'unité de chauffe lorsque celle-ci ne le permet pas directement. Les instructions étant émises par RF, ultrasons ou impulsions lumineuses en provenance de la poignée pour l'interruption de la source de chaleur et vers l'environnement compatible (télé alerte). Une sonnerie modulable en cas de coupure électrique étant reconnue par le P.A.T.

Variante (a) : il s'agit d'un boîtier intermédiaire entre l'unité de chauffe et une prise électrique, ledit boîtier étant non apparent, cet élément basique ne disposant pas d'une interface de programmation.

Variante (b). Dans cette version ledit boîtier comporte l'interface de programmation dont l'écran tactile pour l'affichage des cuissons en cours, des diodes de fonctionnement signifiantes et une zone de positionnement pour chargement par induction d'une télécommande.

Le boîtier étant directement inséré dans la prise électrique et dans l'unité de chauffe par un câble d'alimentation. Ledit boîtier dans sa variante visible ayant 2 fonctions distinctes, interrupteur électrique et chargeur à induction, avantageusement produite par la société TDK, d'une finesse de 0,5 à 0,57mm pour un ampérage identique et programmateur à écran de contrôle. Ledit boîtier étant de fait un terminal thermo culinaire domestique serveur proxy transpondeur. Les boîtiers non apparents n'étant qu'émetteur/récepteur à interface machine avec le P.A.T. et transpondeur pour l'alerte et le contrôle vidéo sur écrans distants. Les communications s'établissant par ultrasons et en mode radiofréquence ou LiFi pour l'alerte. Unités de cuisson et boîtiers radiocommandés disposant d'une batterie auxiliaire couplée d'une sonnerie d'alerte interprétable par un microphone étalonné sur le P.A.T. Ce dernier disposant d'émetteurs autoalimentés pour l'alerte source et distante.

Ces boîtiers ainsi que la télécommande ou le P.A.T. pouvant également servir de relais pour couper l'alimentation électrique via un interrupteur/sectionneur distant et dans ce cas sans l'alimentation secteur desdits boîtiers. Ceux-ci pouvant être autoalimenté par connexion USB.

Indépendamment de systèmes d'interruption de la source de chaleur on retiendra également la possibilité des fonctions domotiques via un central de répartition de l'alimentation électrique ou directement via un sectionneur/interrupteur radiofréquence ou LiFi.

Le boîtier pouvant disposer d'un système de transmission d'énergie sans fil (émetteur) pour l'alimentation électrique du P.A.T.

### CUISSONS AUTOMATISEES ET SECURISEES PAR ELECTROVANNE OU COMMANDE INTEGREE.

Le programme s'effectue entre le P.A.T. et une électrovanne pour le gaz au moyen d'un thermocouple et d'une connexion filaire et/ou radio. Le mode automatique étant déclinable en 2 catégories. Dans le premier cas l'unité de cuisson comporte un système sécurisé par thermocouple ou par ionisation. Dans le deuxième cas le foyer ne dispose pas de la sécurisation par thermocouple. Le thermocouple étant destiné à la sécurisation de l'extinction inopinée des brûleurs et n'intervenant pas dans la gestion automatisée du cycle de cuisson.

Dans le cas du mode de fonctionnement automatique non sécurisé, une électrovanne dite proportionnelle intégrée dans un boîtier couplée à un thermocouple et par liaison filaire ou radio avec la poignée. Ledit boîtier étant directement réuni au réservoir ou par un tuyau d'alimentation. Celle-ci comprenant 3 positions d'ouvertures séquencées et 6 contacteurs au moins à électro-aimants correspondant à :(a)- sans alimentation- fermeture totale déclenchée par coupure électrique, (b) ouverture totale, (c) mode veilleuse, (d) autre allure de chauffe. Le dispositif étant caractérisé par le passage permanent du fluide gazeux en mode veilleuse durant tout le cycle de régulation automatique. Ladite régulation étant réalisée par le flux du mode veilleuse alternant avec une ouverture plus importante de l'électrovanne en fonction du volume d'arrivée du fluide aux brûleurs. En mode automatique la veilleuse étant ouverte durant tout le cycle (stabilisation thermique ou baisse). Les allures allant de l'ouverture maximale à la fermeture totale avec au moins une allure intermédiaire celle-ci pouvant être le mode veilleuse. Le fonctionnement faisant intervenir la coupure électrique provenant d'un sélecteur disposé sur la poignée et le maintien de la veilleuse par l'électrovanne. L'intérêt du dispositif étant de stabiliser la température avec zéro accroissement de celle-ci procurée par la seule source thermique. Les unités sécurisées par fibre optique ou par thermocouple disposant d'un système d'alerte à activation automatique par liaison communicante. La coordination du dispositif se faisant par la transmission du P.A.T. selon les températures constatées par les capteurs et le tuteur coupe circuit. Un curseur à 2 positions permettant le réarmement de la vanne d'obturation en fin de cycle. Le mode automatique nécessitant l'activation des électro-aimants, le mode manuel impliquant l'ouverture en position haute d'une commande verticale à 2 positions. Ce type de vanne étant adaptable par vissage ou perçage sur les contenants tels que cartouches ou bonbonnes. La sécurisation étant doublement assurée par thermocouple et par liaison avec la poignée, celle- ci disposant des paramètres de fonctionnement permettant le positionnement du clapet de l'électrovanne et la fermeture en position basse dudit clapet.

La fermeture automatique de la vanne correspondant à la fin du cycle de cuisson ou à la fermeture par thermocouple, une alerte étant alors transmise dans le périmètre de couverture du P.A.T. ou de l'unité de cuisson par radiofréquences et directement à la source.

Le circuit d'alimentation en fluide des brûleurs pouvant être vertical ou horizontal. La zone de fermeture de ladite vanne étant orientée en conséquence avec des angles de coulissement étalés sur 94° soit de 133° gauche à 47° droite. Un combiné mixte détendeur/vanne étant une possibilité. Une forme semi conique étant particulièrement adaptée.

Le deuxième cas d'automatisation sécurisée des cuissons par thermocouple ne nécessitant pas d'électrovanne autonome, celle-ci intégrée dans la commande fonctionnant en association avec le couvercle intelligent. Celui-ci communiquant les données à un boîtier électronique sécurisé par un thermocouple, ce dernier étant complémentaire d'un bouton de commande positionnable sur 90° du plan. La commande comportant au moins deux séquences automatisées ou un curseur positionnable manuellement. Le cycle de cuisson étant géré par la poignée et la vanne. Ceux-ci assurant la fermeture et l'ouverture du conduit.

Ladite fermeture étant obtenue par l'effet de pesanteur du clapet mobile maintenu électriquement en hauteur selon le débit du fluide gazeux ou par un ressort détendu. L'alerte étant systématiquement déclenchée à la source et à distance pour la fin du cycle et pour l'extinction intempestive des brûleurs. Le thermocouple pouvant être connecté à la poignée par prolongateur filaire USB, indépendant du fonctionnement sécuritaire de l'électrovanne.

La veilleuse pouvant être constamment allumée, ou par auto allumage piézo-électrique. L'alimentation électrique autonome de la gazinière pouvant être générée par au moins un thermocouple indépendant du 1^{er} en complément d'une source auxiliaire (pile ou super condensateur) et connexion filaire avec la poignée. L'autonomie incluant l'affichage, la programmation et l'allumage automatique des brûleurs durant le cycle automatisé. Ce dernier cas étant avantageusement réalisé par fibre et cellule optiques, celles-ci pouvant être couplées avec le thermocouple et une bobine magnétique radio communicante. L'allumage et l'enclenchement en mode seul du cycle automatique pouvant être manuels.

La connexion filaire à la norme USB-OTG et protocole HNP/SRP entre les boîtiers systèmes auxiliaires et le P.A.T. rendant possible le fonctionnement sans recours à une quelconque alimentation électrique tout en sécurisant ledit système. (Données et électricité).

Ce mode de cuisson ne nécessitant pas forcément un écran de programmation, la télécommande sur socle étant compatible ainsi qu'un programmateur manuel pour les cuissons en mode automatique. Dans tous les cas la configuration comportant un câble d'alimentation USB, une pile, un circuit électrique pour électro-aimants, un module transpondeur. Un boîtier interrupteur mixte gaz/électrique étant une possibilité.

La sélection d'un coupe circuit par des tuteurs thermo-fusibles faisant jonction avec le cylindre périphérique en fonction du mode de cuisson autorisant des seuils de températures adaptés par exemple pour le mijotage jusqu'à 90°C et au-delà jusqu'à 180°C en température d'étuvage.

### PROGRAMMATEUR MANUEL AMOVIBLE :

Un sélecteur de température à axe rotatif positionné dans un des 130 trous situés sur le cylindre périphérique étant fonctionnel avec la flèche indicatrice du cylindre central. Ceux-ci positionnées en dents de scie permettant la coupure électrique au moyen dudit sélecteur. Celui-ci bi-face isolant/conducteur fonctionnant par interruption du circuit électrique lors des variations thermiques. La flèche étant sous tension. La température souhaitée par l'utilisateur étant comprise entre 50°C et 180°C. Le sélecteur ayant une longueur ajustée avec le couvercle dans sa partie jointive de surface. L'axe du sélecteur étant muni de deux barrettes parallèles positionnées sur le cylindre excentré, celui-ci faisant contact avec la flèche conductrice du cylindre central. Le mouvement étant décomposé par le contact et l'accroche des deux éléments puis retour au point initial du contacteur isolant puis séparation de celui-ci avec la flèche. Celle-ci venant ensuite en buttée sur l'axe pivotant inférieur, celui-ci étant chevauché lors de la montée. Les deux éléments étant conducteurs, leur contact permettant de rétablir la tension et l'ouverture de l'électrovanne en mode chauffage. L'utilisateur ayant préalablement engagé l'élément amovible et rotatif sous tension dans un des 130 trous à 26 segments. Ledit élément comportant un sas mobile dans lequel la flèche du cadran est maintenue lors des phases de montée est de baisse de la température. La temporisation étant ajustée lors de la rotation de la minuterie, le départ étant couplé avec le contacteur pivot conducteur. L'ajustement étant d'environ deux degrés + et -.Les deux facteurs, durée et température étant réunis dans l'élément mobile à rotation bi-axiale. L'arrêt en fin de programme s'effectuant par la coupure électrique définitive lors du contact isolant du minuteur.

Le cadran comportant 12 sonorités de dix chiffres de 0 à 9, ceux-ci symbolisant, la durée, la température et 2 autres pour la mise en route et l'arrêt. Les signatures acoustiques étant activées manuellement à destination des appareils directement concernés, ceux-ci disposant d'un pré-enregistrement micro affichant immédiatement la programmation de façon numérique. L'activation desdites sonorités s'effectuant par le contact lors de la frappe de l'ongle ou de la pulpe du doigt, celles-ci étant doublement reconnues. Un seul contact par touche étant nécessaire, la distance de reconnaissance étant liée à l'éloignement des appareils. Le début et la fin du programme étant automatiquement reconnus par l'activation du compte à rebours de la minuterie, celle-ci étant configurée pour 2 heures. Les appareils directement concernés étant la télécommande/moniteur, l'unité de cuisson, les boîtiers d'électrovanne et radiocommandé et le P.A.T., ceux-ci disposant d'un microphone et d'un haut-parleur.

Le cadran programmateur étant positionné sur le cadran du cylindre central après dépose du couvercle transparent et sélection des facteurs de température et durée. Cet élément étant optionnel, celui-ci étant fonctionnel avec la connexion filaire USB.

### MONITEUR DE PROGRAMMATION ELECTRONIQUE-cas de figures :

(1) Le P.A.T. ne nécessite aucun dispositif supplémentaire. Cette configuration excluant le programmateur/moniteur amovible. Les communications s'établissant en radiofréquences par exemple en Bluetooth 4.0 ou en WiFi et/ou en mode domotique 433 MHz FM, l'émetteur-récepteur/transpondeur étant disposé dans le cylindre excentré. Plus d'une fréquence et protocole étant mis en oeuvre. La programmation et le suivi de cuissons sur téléphone (application) et/ou directement sur l'unité de chauffe ou l'interrupteur radio commandé. Les télécommandes universelles, les téléphones sans fil DECT, pouvant parfaitement avoir une simple fonction d'alerte moins complète que le suivi vidéo sur écrans compatibles. L'alerte sonore simple étant le premier niveau d'échange puis l'affichage et ensuite le suivi vidéo avec ou sans arrêt de la source de chaleur, d'une façon générale l'interconnexion se déclenchant via un vecteur d'alerte vers des plateformes multimédia compatibles.
(2)Le P.A.T. intègre un programmateur/moniteur amovible sur base station d'accueil de la poignée, celui- ci étant compatible en mode télécommande. Les dimensions correspondant au cylindre central soit 4cm de large sur 4,5 de long donc sans le recouvrement de 3 des côtés (gauche/droite/avant) du cylindre extérieur. Ledit programmateur fonctionnant en mode horizontal porté sur socle bracelet et orientable posé sur ladite station d'accueil avec vidéo contrôle dans les deux cas. Son positionnement sur un socle bracelet permettant une utilisation élargie à un objet utilitaire telle qu'une montre au moins et à fonction téléphone ou non, celui-ci pouvant se passer d'une carte SIM. Ce module optionnel pouvant rester à demeure ou en port amovible et mobile, sur bracelet. Le socle disposant d'une puce TAG RFID pour valideur NFC intégré au programmateur.

On retiendra que ladite montre peut être posée sur la poignée ou encore que celle-ci vient s'emboîter dans la forme du cylindre central, un léger rebord en assurant le maintien. L'affichage direct sur l'écran étant une variante réalisée par l'intégration de la composante optoélectronique, caméra, pyromètre ou imageur thermique non refroidi. Celle-ci étant intégrée à même la montre, à la différence de ladite composante située sous le cadran du cylindre central. Le paramétrage de confinement thermique dudit cylindre central étant incorporé dans le firmware de ladite montre. La composante étant avantageusement disposée dorsalement dans un espacement dont la base est délimitée par la projection des chiffres 4h et 8h du cadran de surface d'une montre analogique. La zone concernée pouvant être linéaire soit comporter un angle droit ou encore être la base d'un triangle. Le cadran central dudit cylindre étant transparent dans la zone de 30/180°C. L'alimentation électrique de la montre/moniteur étant gérée par effet Seebeck lors de la pose. Les autres caractéristiques étant identiques. La poignée centrale ayant une section de 4cm et une longueur de 5,5 cm permettant en outre d'utiliser deux variantes de montre/télécommande simultanément. Chacune étant disposée dans les deux sections tubulaires de la poignée centrale. L'adaptation ainsi réalisée offrant des possibilités d'appareil multifonctions.

L'appareil disposant de la fonction téléphonie avec écran de contrôle tactile RVB étant situé sur la partie supérieure. L'ergonomie de l'ensemble permettant des utilisations vidéo, imagerie thermique ou pyromètre, appareil photo avec zoom etc. L'utilisation en mode thermo-culinaire étant immédiatement opérationnelle sans modification de la configuration. Celle-ci comportant les capteurs infrarouges ou thermiques, le photorécepteur RVB et les LED en position dorsale sur au moins 1 des 2 appareils. Les sections haute et basse de 4 cm étant identiques. Les configurations étant multiples tous les éléments n'étant pas doublés, l'élément du bas étant positionné par l'intérieur du tube. La composante optoélectronique de l'élément inférieur n'étant pas positionnée dans l'axe de la composante supérieure. La fonction téléphonie étant désactivée lors de l'utilisation en mode thermo-culinaire. Le tube récepteur comportant les différentes connexions et l'alimentation des 2 appareils.

### CARACTERISTIQUES DE LA TELECOMMANDE/MONITEUR :

Celles-ci étant liées à l'application, indépendamment d'autres utilisations. On retiendra une version de téléphonie directe incluant les bandes de fréquences des réseaux cellulaires quadri bandes- GSM 850, 900, 1800,1900 MHz- et les bandes de fréquences 2,4 et 5GHz WiFi, Bluetooth, ainsi que la fréquence 13,56 NFC (communication en champ proche).

La taille du boîtier écran étant de 4,5x 4cm à connectique latérale inférieure (alimentation et données). Une fonction de transpondeur incluant les normes domotiques Home Easy en RF 433 MHz FM. Connectivité élargie aux normes MHL et DLNA.

La configuration comprenant un capteur photo à fonction de visiophonie avec éclairage permanent par LED infrarouge, un photorécepteur sensible aux impulsions lumineuses incidentes et réfléchies par LEDs blanche compatibles LiFi et infrarouge. La configuration étant complétée par un contacteur de port activé par tag RFID sur socle et montre NFC, un détecteur de recouvrement (lecture écran non accessible) et de proximité, un film solaire de WYSIPS.

L'autre version ne disposant pas de radiofréquences cellulaires. Celle-ci étant un programmateur/moniteur à fonction montre et écran tactile couleur de mêmes dimensions et connectique que le précédent. Celui-ci étant spécifiquement adapté pour fonctionner en binôme avec un téléphone (mobile ou DECT) ou seulement avec le P.A.T. en mode Bluetooth 4.0.et/ou en mode domotique RF433MHz FM et en WiFi 2,4et 5GHz, et RF433MHz. Un microphone et un haut-parleur étant intégrés dans cette version.

L'écran de type tactile en couleurs RVB étant à affichage direct, sans activation, lors d'un échange dédié cuisson. Celui-ci ayant une résolution minimale de 96x96 pixels.

Des symboles représentant les variantes de cuissons correspondant aux possibilités offertes étant disposées sur l'écran. Cinq icônes symbolisant les mesures températures. (Etuve, cuisson de surface et préchauffage, cuissons à coeur, températures de liquides). L'appareil photo disposant d'un éclairage permanent par LED infrarouge. Un photorécepteur compatible LiFi destiné à l'affichage d'alerte étant lui-même secondé par un transducteur radiofréquence. La configuration étant complétée par un TAG RFID sur socle avec détection du mode porté par la télécommande par connexion NFC. Celle-ci comprenant en outre un détecteur de recouvrement et de proximité, un détecteur de mouvement par ondes électromagnétiques de la sté AllSee. D'une façon générale la même configuration étant intégrée aux deux versions, seul le mode avec ou sans fréquences de téléphonie mobile étant différent.

Les échanges entre les différents appareils impliquant une source fiable d'énergie ou au moins une réserve, dans les cas de la recharge sur socle poignet on retiendra avantageusement la technologie de batterie organique ORB de la Sté NEC permettant d'avoir une batterie auxiliaire sous l'appareil en port bracelet, les deux (2) étant rechargeables sur la station d'accueil lors de l'auto-alimentation électrique par une source de chaleur.

### FONCTION D'ALERTE INDIVIDUELLE ET DE GROUPE :

Le dispositif tenant compte de la communication de groupe dans le cadre de l'invention Dans ce sens les écrans distants intégrant la fonction de transpondeur à validation protocolaire multi cibles et multifréquences mixte (RF/LiFi). Le principe des communications de type main libre en mode texte et retour direct sans manipulation prenant toute son importance dans le cadre des préparations culinaires pour la télécommande.

Le bracelet montre intégrant un contacteur de port et un capteur de recouvrement sur l'écran afin d'activer une validation de réception automatique sous forme de transpondeur selon une procédure spécifique, le port bracelet établissant une procédure permanente durant son maintien. Les appareils avec ou sans sans bracelet impliquant également la reconnaissance faciale par imagerie infrarouge et en lumière naturelle en mode visiophonie. L'affichage direct selon un protocole préétabli justifiant un accusé de réception vers l'émetteur quel que soit le mode de perception audiovisuel reçu. Les conditions requises permettant alors un échange en mode transpondeur lors de la validation. L'avertissement des autre(s) membre(s), la fonction pilote et le choix des cibles revenant à un seul utilisateur, les numéros de l'appelant ou de la machine suffisant à un échange basique.

Ce format de communications étant identifiable par sonnerie et/ou vibrations et/ou couleur spécifiques sur l'écran. Le terminal ou le serveur pouvant être équipés d'un synthétiseur vocal. La représentation graphique de la source identifiée étant personnalisée par une icône machine ou humaine affichée. L'appareil non porté nécessitant la validation d'une identification spécifique à chaque réception. La reconnaissance gestuelle par détection des ondes électromagnétiques du système AllSee étant ici particulièrement indiquée. Un logiciel d'émulation permettant d'utiliser la télécommande/moniteur en mode universel.

L'audio-visuel porté (lunettes et oreillettes connectées), la procédure en mode bracelet, le mouvement de l'appareil et l'identification spécifique ayant valeur de réception pour le système et donc réponse par retour direct. L'icône spécifique étant présentée lors de la réception sur le terminal avec accès direct au contenu sur écran. La procédure enclenchée ayant valeur de réception. Un accusé de réception comportant l'icône de la procédure avec fonction retour sans activation de touche et ce, dès réception sensorielle (vu/entendu). La procédure de validation correspondant à un mode par transpondeur à réception protocolaire, celle-ci étant activée automatiquement et transmise selon 4 situations. Des icônes et des abréviations s'affichant par 1 réception appareil (R) 2 réception (R a) audio (R v) visuel (R av) audio/visuel. Cette procédure étant élargie à la téléphonie.

Le retour comportant une icône de réception humaine de confirmation. Deux modes d'alerte étant ici envisagés. L'avertissement de fin de cuisson avec ou sans maintien au chaud et l'alerte d'intervention. Les deux possibilités étant transmises aux appareils concernés. L'absence de programmation étant indiquée par une LED allumée sur l'écran périphérique du P.A.T. lors d'une cuisson.

Les alertes se faisant sur des écrans, appareils, ou ampoules. La communication inter-objets permettant la surveillance des cuissons sur plateformes multiples. Ex : tablettes, téléphones, liseuses, ordinateurs, tv, consoles de jeux, radios-réveils, ampoules clignotantes etc. Les appareils disposant d'un photorécepteur LiFi (lumière blanche et infrarouge) avec fonction transpondeur par RF ou encore émetteur /récepteur RF. Les effets pouvant être visuels, sonores ou vibrants. Ces cas permettant la domotique itinérante aux normes IPv4 et I Pv6, ceux-ci intégrant des protocoles spécialisés tels que : Z.Wave, Chacon, DeltaDore etc.

Le P.A.T. étant transpondeur principal ou secondaire selon l'activation des terminaux concernés. (Unités de cuissons et interrupteurs par radiofréquences ou ultrasons). Le P.A.T. émettant par radio fréquences et /ou par liaison infra-rouge et par ultrasons à des fréquences de transmissions x calquées au rythme des températures et des effets de celles-ci vers son terminal associé. Le relais en mode LiFi avantageusement compatible en technologie Nanolight étant retransmis par les unités de cuisson et les interrupteurs télécommandés en émission réception et en réception sur bracelet montre. La source thermique pouvant provenir d'une énergie primaire telle que le thermique solaire ou le bois, l'alerte étant toujours émise.

### AUTRES CAS :

Les transmissions de type satellitaire ou Go Tenna étant d'autres variantes. Une fonction transpondeur par relais en mode Bluetooth 4.0 ou Zig Bee et autre types de radiofréquences étant compatibles dans un contexte spécifique. Des conseils nutritionnels d'un assistant personnel électronique tel que le FITBIT ULTRA pouvant être affichés.

Une configuration excluant la composante optronique : caméras, sonde à piquer et pyromètres étant une possibilité.

Le fonctionnement hors réseau électrique étant possible pour le gaz, l'alimentation électrique en connexion filaire avec le P.A.T. durant la cuisson assurant l'autonomie Y compris l'affichage de programmation et fonction moniteur.

### HIERARCHISATION DES ECRANS ET DISPOSITIFS COMMUNICANTS :

Le procédé s'appuyant sur de nombreux écrans dans un contexte multi usage, par nature inconnu, afin de s'adapter à un environnement et des configurations diverses et imprévues telles que : sources thermiques, plaques de cuissons avec ou sans écrans, communicantes ou non. Dans une approche rationnelle on retiendra la sélection de l'écran le plus adapté à l'utilisation ainsi que l'émetteur associé. Avec ou sans écran auxiliaire, les températures étant toujours présentées.

Le P.A.T. ayant une fonction de commutateur. Par exemple si l'unité de cuisson ou le boîtier radiocommandé sont utilisés, seule la LED RVB (rouge, orange, verte) du P.A.T. est activée.

Les icônes affichées représentant les possibilités offertes par les différents médias connectés et ceux directement concernés à la source. Lesdites icônes correspondant dans l'ordre décroissant à la fonction de télécommande/moniteur par substitution à celle-ci. Les médias connectés tels que TV, écrans d'ordinateurs, tablettes, consoles etc. pouvant n'avoir qu'une des deux fonctions. Les précisions en fin du cycle de programmation incluant l'inertie thermique.

Les alertes d'interruptions étant transmises sur les objets connectés selon leur implication. Il conviendra de distinguer les écrans source, directement fonctionnels, des écrans distants. L'interactivité de ceux-ci, permettant lors de la vidéotransmission de stopper la source thermique ou de sélectionner la position maintien au chaud, ceux- ci étant avantageusement dotés d'une touche virtuelle ou physique ou d'une fonction commande gestuelle - stop cuisson - soit directement soit via leur télécommande.

Le minuteur programmateur manuel ayant une fonction de régulateur thermique pour le gaz, celui-ci pouvant être utilisé sur les autres sources de chaleur en mode d'alerte fin de cuisson.

Le présent brevet ne se limitant pas aux seules applications découlant de celui-ci, mais d'une façon générale aux procédés thermo-culinaires industriels et aux différents appareils de thermo-cuisson disposant d'écrans dont le paramétrage intègre un firmware lié au confinement thermique des cuissons tel que décrit.

## Revendications

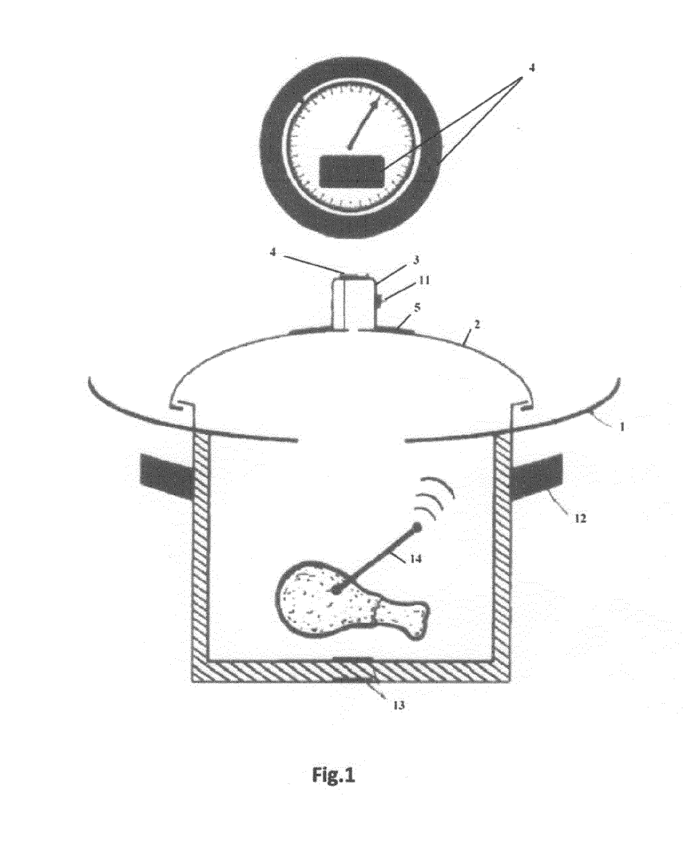

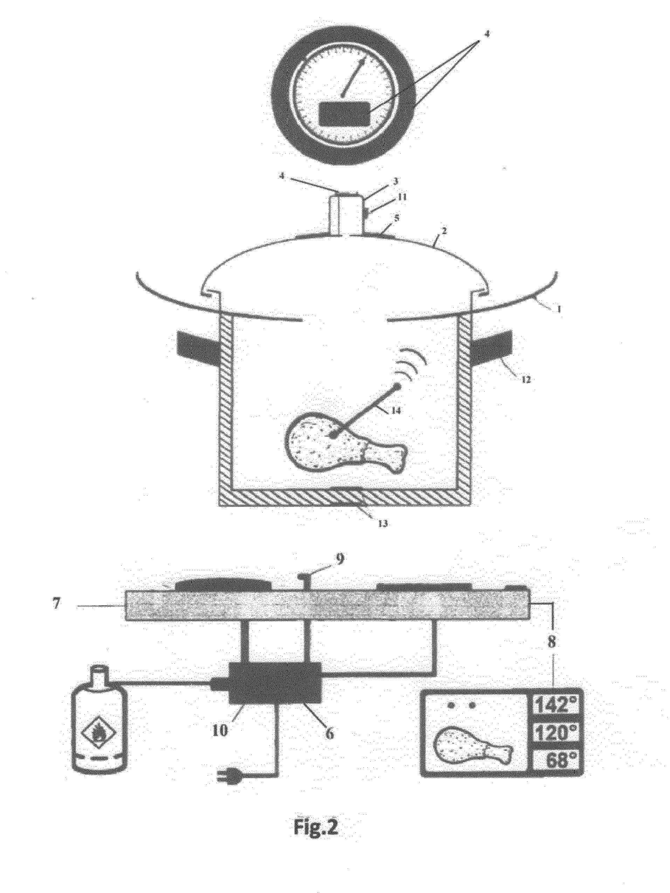

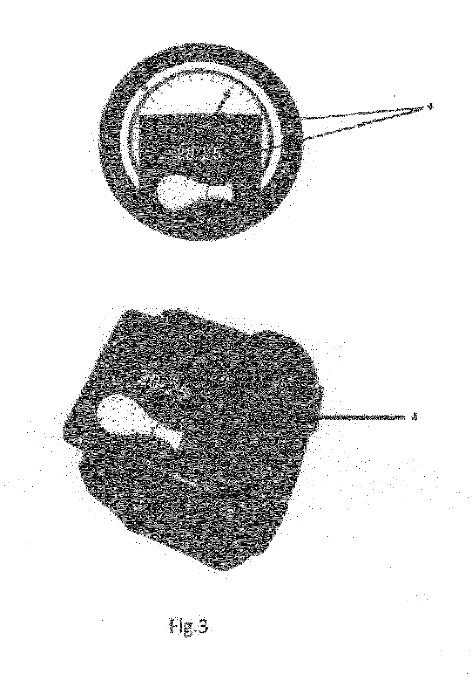

1. Procédé d'assistance thermo-culinaire multi cuissons réalisé par le recouvrement des contenants, **caractérisé en ce que** ledit recouvrement forme une enceinte de confinement thermique adaptée au fonctionnement d'un système embarqué autonome, celui-ci comportant un support d'extension(1) surmonté d'un couvercle central(2) muni d'une poignée bi cylindrique amovible(3) dotée d'écrans à affichage commutable et d'une télécommande-moniteur optionnelle multi-supports (4). Un ensemble thermo et électro générateur(5) alimentant une instrumentation intégrant une composante optoélectronique paramétrée et un dispositif impliquant des sondes de température communiquant par radiofréquences, impulsions lumineuses et ultrasons. Un logiciel assurant l'interopérabilité avec des interrupteurs électriques radiocommandés(6), des plaques de cuisson intelligentes(7) à touche commune d'activation, celles-ci étant dotées de caméras et de capteurs sous chaque foyer et d'un écran mixte d'affichage/programmation (8) à reconnaissance faciale. Les cuissons au gaz comportant un coupe circuit et un thermocouple (9) intégré dans un boîtier(10) électronique relié à la poignée par liaison filaire USB(11), celui-ci étant équipé d'une commande à ouverture séquencée et fermeture électromagnétique. Les contenants disposant de données de paramétrage sans contact via des tags RFID (12) et par graphisme à code matriciel (13). Des accessoires incluant un pyromètre à piquer sans fil (14), une unité de brassage interchangeable, un support tubulaire microporeux, un programmateur manuel amovible, sonorisé. FIG1.

2. Procédé selon la revendication 1, **caractérisé en ce que** l'ensemble de recouvrement est constitué d'un couvercle conique central (2) d'un diamètre de 16 cm de dimension intérieure et de 16,60 cm hors tout, d'une longueur de flèche sous dôme de 1,5 cm au moins pour un rebord circulaire d'une hauteur de 1 cm et d'un rebord à gorge de 0,3 cm, couvercle solidarisé sur un support d'extension(1) inversable, au moyen de 2 tiges à picots prenant appui dans la gorge circulaire de celui-ci, ledit support ayant une diagonale ou un diamètre de 40 cm pour une hauteur d'au moins 3 cm et une ouverture centrale de 13cm de diamètre.

3. Procédé selon les revendications 1et 2, **caractérisé en ce que** l'ensemble de recouvrement est formé d'un matériau d'une épaisseur comprise entre 1 et 3 mm, d'aluminium, d'argent, de cuivre, de tôle d'acier, de céramique, de composite, de polymères soumis à un traitement de surface par un laser femtonique ou un couchage à base de nitrure de bore, ou de graphène transformé ou de fluorographène ou de nanotubes de carbone et sur la face extérieure du couvercle par une peinture et/ou une collerette isolante munie d'un graphisme d'interprétation signifiant.

4. Procédé selon la revendication 1, **caractérisé en ce que** la poignée (3) est formée par la réunion concentrique de 2 cylindres séparables fonctionnellement autonomes en polystyrène syndiotactique ou en polyamide 6.6.6, d'une longueur de 5,5 cm pour un diamètre de 7,5 cm dans sa partie supérieure dont 4,8 cm pour une épaisseur 0,4 du cylindre central, ladite poignée reposant jointivement sur la totalité du cylindre périphérique puis vissée au couvercle.

5. Procédé selon les revendications 1 et 4, **caractérisé en ce que** le cylindre central de la poignée(3) comprend une composante optoélectronique et une sonde(6) de température pour thermomètre bi métal dont la tige de transmission verticale est logée dans l'épaisseur dudit cylindre, un axe excentré assurant l'inversion du mouvement vertical de la flèche située au centre du cadran.

6. Procédé selon les revendications 1 et 5, **caractérisé en ce que** la composante optoélectronique du cylindre central de la poignée (3) est située sous le cadran dudit cylindre, celle-ci étant formée d'un bloc optique intégrant un capteur pour pyromètre à écran séparé et une caméra disposant d'un photo récepteur paramétré de type CMOS à graphène, sensible dès 0,01 Lux, dont l'éclairage interne comporte une LED blanche et une LED infrarouge.

7. Procédé selon les revendications 1 et 5, **caractérisé en ce que** le cadran (3) dispose de contacteurs positionnés en dents de scie pour une graduation de 0,1-0,2-0,5 et 1°C répartis sur 2 ou 3 niveaux, ceux-ci étant activés lors des variations thermiques générées par la rotation de la flèche, celle-ci étant sous tension, puis transmises à un écran électronique (4) intégré sur la surface même du cadran.

8. Procédé selon les revendications 1 et 4, **caractérisé en ce que** le cylindre périphérique comporte un transducteur piézoélectrique à ultrasons, des modules radio fréquences en 433 MHz-FM et 13,56GHz RFID, 2,4 et 5 GHz Bluetooth WiFi et optiques irDA-LiFi, un microprocesseur SoC, un écran multi sources subdivisé en 4 secteurs, un port USB, un dispositif d'alerte, une diode RVB, un témoin de charge, un tuteur coupe circuit thermo fusible, 2 modules générateurs thermoélectriques au moins, une connectique de station d'accueil, un programmateur manuel amovible de température et durée à touches sonores préenregistrées, un microphone, un haut-parleur, un gyroscope, un accéléromètre.

9. Procédé selon les revendications 1 et 7, **caractérisé en ce que** le pyromètre à piquer est un instrument tubulaire comportant un microprocesseur à cellules MEC et un écran LCD de 27 segments et une LED RVB situé diamétralement, un photorécepteur et un émetteur/ récepteur radiofréquence.

10. Procédé selon les revendications 1 et 9, **caractérisé en ce que** le pyromètre à piquer à écran est muni d'un dispositif optoélectronique communiquant, sans fil, d'une caméra à LED blanche, sans lentille, utilisant le calcul à transformée de Fourier, l'ensemble étant autoalimenté par un mécanisme de magnétostriction inverse d'environ 5 cm et par thermo générateur à aimant permanent.

11. Procédé selon la revendication 1, **caractérisé par** l'interruption de l'alimentation électrique via un dialogue machine to machine entre la poignée (3) du couvercle et les plaques de cuisson ou des interrupteurs télécommandés, ceux-ci étant équipés en tout ou partie d'au moins un émetteur-récepteur/transpondeur fonctionnant par radiofréquences, infrarouge, LiFi, ultrasons et connexion filaire.

12. Procédé selon les revendications 1 et 11, **caractérisé en ce que** les plaques de cuisson intelligentes disposent d'un écran mixte moniteur/programmateur à reconnaissance faciale intégrant un système de charge par induction, un serveur proxy, un dispositif de sonorités préenregistrées, un transducteur ultrasonique piézoélectrique, une batterie auxiliaire, un périphérique NFC, un microphone, un haut-parleur.

13. Procédé selon la revendication 1 et 6, **caractérisé en ce que** la cuisson au gaz comporte une liaison filaire couplée avec un sélecteur de programmation amovible comportant 130 trous, 2 tuteurs coupe circuit et un thermocouple en association avec un dispositif de commande intégré dans un boîtier(10) assurant un débit permanent du fluide gazeux en mode veilleuse et au moins une allure de chauffe séquencée.

14. Procédé selon les revendications 1 et 4, **caractérisé en ce que** l'accessoire de brassage est interchangeable avec le cylindre central, l'accessoire intégrant une sonde amovible de température par thermocouple, un pyromètre à écran séparé et une caméra à LED blanche sans lentille utilisant le calcul de la transformée de Fourier.

15. Procédé selon la revendication 1, **caractérisé en ce que** le support tubulaire microporeux est un accessoire formé d'un tube support creux étanches à segments emboîtables dont l'élément en contact avec le fond du contenant est microporeux et à surface tramée dont le paramétrage est intégré dans le logiciel de la poignée.

16. Procédé selon les revendications 1 et 3, **caractérisé en ce que** l'alimentation électrique de la poignée est réalisée par un double dispositif thermo et électro générateur au moyen d'une collerette isolante contrecollée sur un film souple d'au moins 8cm recouvrant en tout ou partie le dôme central et d'au moins 2 thermo-générateurs disposés dans la poignée destinés à l'alimentation électrique et sonde de température(3).

17. Procédé selon les revendications 1 et 8, **caractérisé en ce que** la télécommande de programmation optionnelle (4) est une montre à écran tactile à affichage direct et indirect dont la configuration et la recharge sont automatiquement activées lors de la pose sur le socle poignée et/ou la plaque de cuisson et/ou le boîtier interrupteur d'alimentation électrique.

18. Procédé selon les revendications 1 et 17, **caractérisé en ce que** la télécommande de programmation optionnelle (4) à une fonction de montre dont les dimensions de 4cmx 4,5 ou d'un diamètre de 4 cm et fonctionnelle en mode porté sur socle bracelet et sous forme fixe en pose sur station d'accueil intégrée à la poignée et ce, de façon permanente ou ponctuelle sur l'un ou l'autre support.

19. Procédé selon les revendications 1,17 et 18, **caractérisé en ce que** la télécommande de programmation optionnelle(4)a des dimensions de 4x4,5 cm ou de 4cm de section celle-ci fonctionnant au moyen des radio fréquences de la téléphonie cellulaire en quadri bandes et 2,4 et 5 GHz, 13,56GHz et 433MHz, les échanges intégrant un protocole sans activation de touche, l'appareil disposant d'une caméra de visiophonie, d'un photorécepteur LiFi et infrarouge, d'une LED infrarouge, d'un détecteur de recouvrement, d'un contacteur de port, d'un microphone à sonorités préenregistrées, d'un haut-parleur, et sur la face opposée à l'écran d'une caméra paramétrée pour le confinement thermique, d'un pyromètre ou un photorécepteur thermique refroidi.

20. Procédé selon les revendications 1,17 et 18, **caractérisé en ce que** la télécommande de programmation optionnelle(4) est complémentaire d'un téléphone cellulaire, celle-ci disposant d'un écran couleur RVB et des radiofréquences de : 2,4 et 5 GHz et 433 MHz, l'appareil étant équipé d'une caméra de visiophonie , d'un photorécepteur compatible LiFi et infrarouge, d'une caméra et d'un pyromètre, ou d'un imageur thermique dorsaux, d'un détecteur de recouvrement, d'un contacteur de port, d'un microphone à sonorités préenregistrées, d'un dispositif de reconnaissance gestuelle par ondes électromagnétiques.

21. Procédé selon l'une quelconque des revendications précédentes **caractérisé en ce que** le système communiquant embarqué de la poignée est à transmissions directes et indirectes en relais par le foyer de cuisson ou le boîtier interrupteur au moyen d'émetteurs fonctionnant par radiofréquences ou par amplitudes lumineuses générant des effets sonores, vibrants et visuels sur les objets connectés, ceux-ci disposant d' une touche stop cuisson sur l'objet et sur l'écran.

22. Procédé selon les revendications 1 et 12, **caractérisé en ce que** le graphisme à code matriciel est imprimé ou gravé sur une surface de 2 cm de côté à l'intérieur et/ou à l'extérieur du fond central des contenants et pour les tags dans la poignée desdits contenants.

23. Procédé selon les revendications 1 et 12, **caractérisé en ce que** les plaques de cuisson comportent un capteur de températures à calculateur en complément ou séparément d'au moins une caméra imageur sous chaque foyer avec affichage interprété du graphisme à code matriciel des contenants et des températures.
